# EUROPEAN PATENT APPLICATION

(11) **EP 4 674 827 A1**
(43) Date of publication of application: **07.01.2026**
(21) Application number: 24785141.3
(22) Date of filing: 01.04.2024
(51) Int. Cl.: C04B 35/48, C04B 35/64, H01M 10/0562, H01M 10/052

(54) **LITHIUM LANTHANUM ZIRCONIUM OXIDE-BASED CERAMIC, METHOD FOR PRODUCING SAME, AND ALL-SOLID-STATE LITHIUM SECONDARY BATTERY INCLUDING SAME**

(30) Priority: 04.04.2023 KR 20230044291
(71) Applicant: SK On Co., Ltd., Seoul 03161 (KR); Dankook University Cheonan Campus Industry Academic Corporation Foundation, Cheonan-si, Chungcheongnam-do 31116 (KR)
(72) Inventor: PARK, Ji-Young, Daejeon 34124 (KR); HEO, Pil-Won, Daejeon 34124 (KR); NASIR, Mohammad, Cheonan-si Chungcheongnam-do 31116 (KR); PARK, Hee-Jung, Cheonan-si Chungcheongnam-do 31116 (KR)
(74) Representative: Prüfer & Partner mbB Patentanwälte · Rechtsanwälte
(86) International application number: PCT/KR2024/004189
(87) International publication number: WO 2024/210435

(57) **Abstract**

A method for producing a lithium lanthanum zirconium oxide (LLZO)-based ceramic according to an embodiment of the present invention comprises a sintering operation of sintering an oxide sheet that includes LLZO powder particles including the elements lithium, lanthanum, and zirconium. The sintering operation may include a first sintering operation of sintering at a temperature of T₁ and a second sintering operation of sintering at a temperature of T₂ lower than T₁. An LLZO-based ceramic according to another embodiment of the present invention has a relative density of at least 88% and is composed of grains having a size of 1-10 µm, wherein the standard deviation of the grain size is 80% or less of the average grain size, and the grains may have a cubic crystal structure.

## Description

### Technical Field

The present disclosure relates to a lithium lanthanum zirconium oxide-based ceramic, a method for producing the same, and an all-solid-state lithium secondary battery including same.

### Background Art

Conventional lithium-ion batteries (LIB) utilize a liquid electrolyte. Due thereto, the liquid electrolyte penetrates through pores between an anode and a cathode, thereby functioning as a conductive path for lithium ions.

Conventional lithium-ion batteries using liquid electrolytes pose safety risks, such as leakage of the liquid electrolyte or explosion or ignition of the secondary battery.

In contrast, all-solid-state batteries (LIB) utilize solid electrolytes, and thus, the risk of leakage or expansion is eliminated, and superior safety is offered, and also, a separator is not required to allow for increased output through structural improvements, and the implementation of diverse configurations, so that research into these technologies is actively underway.

Among various solid electrolyte materials, specifically, a garnet-structured lithium lanthanum zirconium oxide (LLZO) ceramic is attracting attention as a solid electrolyte for next-generation batteries due to their thermal and electrochemical stability, relatively low grain boundary resistance, high ionic conductivity, and stability with lithium anodes.

### Disclosure of Invention

### Technical Problem

An aspect of the present disclosure is to provide a dense lithium lanthanum zirconium oxide-based ceramic having suppressed abnormal grain growth (AGG) and a method for producing the same.

Another aspect of the present disclosure is to provide an all-solid-state lithium secondary battery with improved safety and energy density by including a LLZO-based ceramic having superior performance.

### Solution to Problem

A method for producing a lithium lanthanum zirconium oxide (LLZO)-based ceramic according to an embodiment includes a sintering operation of sintering an oxide sheet including LLZO powder particles including elements lithium, lanthanum and zirconium, and the sintering operation includes: a first sintering operation of sintering at a temperature of T₁; and a second sintering operation of sintering at a temperature of T₂, lower than T₁.

The T₁ may be 1050 to 1400°C, and the T₂ is 1000 to 1300°C.

The first sintering operation may be performed for 10 seconds to 1 hour, and the second sintering operation is performed for 10 minutes to 24 hours.

The metal oxide powder particles may include an oxide of a lanthanide metal.

The metal oxide powder particles may be included in an amount of 1 to 10 mol% based on La in total LLZO powder particles.

The metal oxide powder particles may include an oxide of a lanthanide metal.

The metal oxide powder particles may include at least one selected from the group consisting of La₂O₃ or Sm₂O₃ and Gd₂O₃.

A lithium lanthanum zirconium oxide (LLZO)-based ceramic having a relative density of 88% or greater, and comprising one or more crystal grains having a size of 1 to 10 µm, and a standard deviation of a crystal grain size is 80% or less of an average crystal grain size, and the crystal grains may have a cubic crystal structure.

The average crystal grain size may be 1 to 10 µm.

The average crystal grain size may be 4 to 9 µm.

The standard deviation of the crystal grain size may be 50% or less of the average crystal grain size.

The LLZO-based ceramic may include a garnet-type oxide crystal grain including lithium, lanthanum and zirconium.

The LLZO-based ceramic may include crystal grains in which Li-sites are doped with a trivalent cation metal element.

The LLZO-based ceramic may include crystal grains in which Li-sites are doped with at least one element selected from the group consisting of Al, Ga, In, Sc and Y.

The LLZO-based ceramic may include crystal grains having a composition represented by the following chemical formula 1.

[Chemical Formula 1] Li₇₋₃ₐM¹ₐLa₃Zr_{2-1.25b}M²_{b}O₁₂

In chemical formula 1, 0<a<1 and 0≤b<1 may be satisfied, M¹ may be at least one trivalent cation metal selected from the group consisting of Al, Ga, In, Sc and Y, and M² may be at least one pentavalent cation metal selected from the group consisting of Nb, Ta and V.

The LLZO-based ceramic may further include a lanthanide metal oxide.

The lanthanide metal oxide may have at least one crystal phase selected from the group consisting of La₂O₃, Sm₂O₃ and Gd₂O₃.

The LLZO-based ceramic may have a composition represented by the following chemical formula 1-1.

[Chemical Formula 1-1] Li_{7-3c}M³_{c}La₃Zr_{2-1.25d}M⁴_{d}O₁₂•e(La₂O₃)

In chemical formula 1-1, 0<c<1 and 0≤d<1 0.001≤e<0.1 may be satisfied, M³ may be at least one trivalent cation metal selected from the group consisting of Al, Ga, In, Sc and Y, and M⁴ may be at least one pentavalent cation metal selected from the group consisting of Nb, Ta and V.

An oxide-based electrolyte including the lithium lanthanum zirconium oxide (LLZO)-based ceramic of an embodiment may be included.

An all-solid-state lithium secondary battery comprising the oxide-based electrolyte of an embodiment may be included.

### Advantageous Effects of Invention

A lithium lanthanum zirconium oxide (LLZO)-based ceramic produced according to a method for producing the LLZO-based ceramic may be dense and may suppress coarse grain growth (Abnormal Grain Growth (AGG)).

A lithium lanthanum zirconium oxide (LLZO)-based ceramic produced according to a method for producing the LLZO-based ceramic may have grains ranging in size from 1 to 10 µm.

### Brief Description of Drawings

FIG. 1 illustrates SEM photographs of fracture surfaces of LLZO-based ceramics of Inventive Examples 1 and 2.
FIG. 2 illustrates SEM photographs of fracture surfaces of the LLZO-based ceramics of Inventive Examples 3 and 4.
FIG. 3 illustrates SEM photographs of fracture surfaces of the LLZO-based ceramics of Inventive Examples 5 and 6.
FIG. 4 illustrates SEM photographs of fracture surfaces of LLZO-based ceramics of Comparative Examples 1 and 2.
FIG. 5 illustrates XRD pattern results of the LLZO-based ceramic of Inventive Example 1 and an enlarged graph of a portion thereof;
FIG. 6 illustrates XRD pattern results of the LLZO-based ceramics of Inventive Examples 5 and 6 and an enlarged graph of a portion thereof.
FIG. 7 illustrates AC impedance resistance measurement results of a La-excess LLZO specimen of Inventive Example 5.

### Best Mode for the Invention

Hereinafter, an embodiment of the present disclosure will be described with reference to various examples. However, the embodiment of the present disclosure may be modified in various manners, and the scope of the present disclosure is not limited to the embodiment described below.

In the present disclosure, "sintering" refers to a phenomenon in which powder particles are tightly adhered to each other and solidified by external energy, and for example, after a formed body having a predetermined shape is produced using a slurry including powder particles and a binder, the powder particles included in the formed body are adhered to each other through a thermal activation process to form a single mass.

In the present disclosure, "ceramic" may refer to a polycrystalline body formed by sintering the formed body.

A LLZO-based ceramic may be difficult to densify during sintering when a powder particle size is coarsening, and when the powder particles are finely divided, abnormal grain growth (AGG) may occur, which result in a complex and difficult manufacturing process due to poor sinterability.

An embodiment is to provide a LLZO-based ceramic that are both dense and have controlled grain size, and a method for producing the same.

The method for producing the LLZO-based ceramic according to an embodiment may include a forming operation of forming a target shape and increasing green density, and a sintering operation of heat treating a sheet including LLZO powder particles for densification of a formed body.

In addition, the method for producing the LLZO-based ceramic according to an embodiment may further include, as a pretreatment operation of the forming operation and the sintering operation, a powder preparation operation of mixing and/or milling raw LLZO powder particles to control a powder particle shape, a particle size, and distribution of the raw LLZO powder particles, and a calcination operation of securing a target phase and removing impurities from the ceramic phase.

The method for producing the LLZO-based ceramic according to an embodiment may perform sintering of the LLZO-based ceramic in two operations, in order to produce a dense and AGG-suppressed LLZO-based ceramic. Specifically, the method may perform two-step sintering, including an eleventh sintering operation of sintering an oxide sheet including LLZO powder particles at a temperature T₁, and a second sintering operation of sintering at a temperature T₂ different from T₁.

The T₂ temperature may be lower than T₁. By sintering the second sintering operation at a lower temperature than the first sintering operation, excessive ceramic grain growth may be suppressed, thereby inhibiting AGG. For example, when T₁ is 1050 to 1400°C, T₂ may be 1000 to 1300°C, and specifically, when T₁ is 1050 to 1300°C, T₂ may be 1000 to 1250°C, and more specifically, when T₁ is 1050 to 1250°C, T₂ may be 1000 to 1200°C.

More specifically, the heat treatment time of the first sintering operation may be equal to or shorter than a heat treatment time of the second sintering operation. When the first sintering operation is performed for a time equal to or shorter than the second sintering operation, AGG may be suppressed by suppressing excessive growth of ceramic particles. While the first sintering operation is performed for 10 seconds to 1 hour, the second sintering operation may be performed for 10 minutes to 24 hours, and specifically, while the first sintering operation is performed for 1 minute to 30 minutes, the second sintering operation may be performed for 1 hour to 6 hours, and more specifically, while the first sintering operation is performed for 5 minutes to 20 minutes, the second sintering operation may be performed for 2 hours to 4 hours.

The LLZO powder particles may include LLZO doped with a heteroatom. The doped LLZO may be doped with a heteroatom on at least one site of a lithium site (Li-site), a lanthanum site (La-site), and a zirconium site (Zr-site), and specifically, the heteroatom may be doped on the lithium site (Li-site), or may be doped on the lithium site (Li-site) and the zirconium site (Zr-site). Specifically, the heteroatom may be substitutionally doped on the lithium site (Li-site).

For example, the heteroatom doped at the lithium site may be a trivalent cation metal, such as at least one selected from the group consisting of Al, Ga, In, Sc and Y, specifically, Ga.

In the case of the Ga element, the Ga source that may be used as the doping material may be at least one selected from the group consisting of gallium nitrate, gallium chloride and gallium sulfate, but the present disclosure is not limited thereto.

For example, the heteroatom that may be doped on the lanthanum site may be at least one selected from the group consisting of Ca, Sr, Ce and Ba, but the present disclosure is not limited thereto.

For example, the heteroatom that may be doped at the zirconium position may be a pentavalent cation metal, and may be, for example, at least one selected from the group consisting of Nb, Ta and V, but the present disclosure is not limited thereto.

In the LLZO-based ceramic of an embodiment and the method for producing the same may be a compound represented by the following chemical formula 1.

[Chemical Formula 1] Li₇-₃ₐM^{l}ₐLa₃Zr₂-_{1.25b}M²_{b}O₁₂

In Chemical Formula 1, 0<a<1 and 0≤b<1 may be satisfied,
M¹ may be at least one trivalent cation metal selected from the group consisting of Al, Ga, In, Sc and Y, and
M² may be at least one pentavalent cation metal selected from the group consisting of Nb, Ta and V

The sheet including the LLZO powder particles of an embodiment may further include metal oxide powder particles. As the sheet including the LLZO powder particles includes the metal oxide powder particles, an unreacted secondary phase may be formed during LLZO sintering, thereby suppressing grain growth.

The metal oxide powder particles may be lanthanide metal oxide powder particles, and specifically, at least one selected from the group consisting of La₂O₃, Sm₂O₃ and Gd₂O₃, and specifically, La₂O₃.

The metal oxide powder particles may further be included in an amount of 1 to 10 mol%, and specifically, 1 to 5 mol%, based on a total La content in the LLZO powder particles.

An embodiment provides a LLZO-based ceramic. The LLZO-based ceramic may be produced using the above-described method for producing the LLZO-based ceramic.

The LLZO-based ceramic may have a relative density of 88% or greater, specifically, 90% or greater.

The LLZO-based ceramic may include one or more grains having a size of 1 to 10 µm, and the relative density and a grain size of the LLZO-based ceramic may be measured using a measurement method described in an embodiment below.

A standard deviation of the grain size may be 80% or less of an average grain size, specifically 70% or less, more specifically 60% or less, and even more specifically 50% or less.

The average grain size may be 1 to 10 µm, specifically 4 to 9 µm.

The grains included in the LLZO-based ceramic may have a cubic crystal structure, and thus may exhibit excellent ionic conductivity.

In an embodiment, the LLZO-based ceramic may include garnet-type oxide grains including lithium, lanthanum and zirconium. Specifically, the LLZO-based ceramic may include LLZO-based grains doped with a heterogeneous element. The crystal grains may be doped with a heterogeneous element on at least one site of the lithium site (Li-site), the lanthanum site (La-site), and the zirconium site (Zr-site), and specifically, the heterogeneous element may be doped on the lithium site (Li-site), or the heterogeneous element may be doped on the lithium site (Li-site) and the zirconium site (Zr-site). Specifically, the heterogeneous element may be substitutionally doped on the lithium site (Li-site) .

Specifically, the LLZO-based ceramic may include garnet-type oxide crystal grains doped on the lithium site (Li-site) with a trivalent cation metal element. More specifically, in the LLZO-based ceramic, the lithium site (Li-site) may include grains doped with at least one element selected from the group consisting of Al, Ga, In, Sc and Y, and more specifically, the lithium site (Li-site) may include grains doped with Ga.

For example, the heterogeneous element doped on the lanthanum site may be at least one element selected from the group consisting of Ca, Sr, Ce and Ba, but the present disclosure is not limited thereto.

For example, the heterogeneous element doped on the zirconium site may be a pentavalent cation metal, such as at least one element selected from the group consisting of Nb, Ta and V, but the present disclosure is not limited thereto.

For example, the LLZO-based ceramic may include grains in which the lithium site (Li-site) is doped with Ga, grains in which the lithium site (Li-site) is doped with Ga and the zirconium site (Zr-site) is doped with Ta, or a combination thereof. Specifically, the LLZO-based ceramic may include grains in which the lithium site (Li-site) is doped with Ga, and may have even better lithium ion conductivity.

More specifically, the LLZO-based ceramic may include crystal grains represented by the above-described Chemical Formula 1.

The LLZO-based ceramic may further include a lanthanide metal oxide. Specifically, the lanthanide metal oxide may include at least one lanthanide metal oxide selected from the group consisting of La₂O₃, Sm₂O₃ and Gd₂O₃. The LLZO-based ceramic may have a secondary phase by including the lanthanide metal oxide.

The LLZO-based ceramic further including the lanthanide metal oxide may have a composition represented by the following Chemical Formula 1-1.

[Chemical Formula 1-1] Li_{7-3c}M³_{c}La₃Zr_{2-1.25d}M⁴_{d}O₁₂•e(La₂O₃)

In Chemical Formula 1-1, 0<c<1, 0≤d<1, and 0≤e<0.1 may be satisfied. Specifically, 0<c≤0.5, and 0.001≤e<0.1 may be satisfied, and more specifically, 0.001≤e≤0.05 may be satisfied, and even more specifically, 0.001≤e≤0.03 may be satisfied
M³ may be at least one trivalent cation metal selected from the group consisting of Al, Ga, In, Sc and Y.
M⁴ may be at least one pentavalent cation metal selected from the group consisting of Nb, Ta and V.

The element distribution within the LLZO-based ceramic may be quantitatively analyzed by analyzing a content of the added material through a surface analysis method such as Energy Dispersive X-ray Spectroscopy (EDS) and Electron Energy Loss Spectroscopy (EELS). Specifically, a surface of the LLZO-based ceramic may be analyzed by performing the EDS analysis in a thickness direction (i.e., a plane parallel to a surface in contact with a substrate).

Another embodiment provides an oxide-based electrolyte including the LLZO-based ceramic, and an all-solid-state lithium secondary battery including the oxide-based electrolyte. The all-solid-state lithium secondary battery may include the oxide-based electrolyte as a solid electrolyte between a cathode and an anode, or may be included in the cathode.

The cathode is not particularly limited, and may include a lithium-transition metal oxide such as lithium cobalt oxide (LiCoO₂), lithium manganese oxide (LiMn₂O₄), or lithium nickel oxide (LiNiO₂), or a lithium-transition metal composite oxide in which a portion of the transition metals is substituted with another transition metal.

For example, the lithium-transition metal oxide may include nickel (Ni) and at least one selected from the group consisting of cobalt (Co) and manganese (Mn). For example, the cathode active material may include an NCM-based cathode active material; a Mn-rich cathode active material; or an LLO (Li-rich layered oxides, Overlithiated Oxides, Overlithiated Layered Oxides, OLO, LLOs)-based cathode active material. For example, the lithium-transition metal oxide may have a structure represented by the following chemical formulas 2 and 3.

[Chemical Formula 2] LiₐNi_{b}M_{1-b}O₂

In Chemical Formula 2, 0.9≤a≤1.2, and b≥0.5 may be satisfied, and M is at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr. Specifically, in Chemical Formula 2, 0.95≤a≤1.08 may be satisfied, and b may be 0.6 or more, 0.8 or more, greater than 0.8, 0.9 or more, or 0.98 or more. Specifically, in chemical formula 2, M may include Co, Mn or Al, and more specifically, M may include Co and Mn, and optionally further include Al.

[Chemical Formula 3] pLi₂MnO₃•(1-p)LiqJO₂

In chemical formula 3, 0<p<1, and 0.9≤q≤1.2 may be satisfied, and J may be one or more elements selected from the group consisting of Mn, Ni, Co, Fe, Cr, V, Cu, Zn, Ti, Al, Mg and B.

[Chemical Formula 4] Li₁₊ₓM₁₋ₓO₂

In chemical formula 4, 0≤x≤0.4 may be satisfied, and M is at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr. Specifically, in chemical formula 4, M may include Ni, Co, Mn or Al, and more specifically, may include Ni, Co and Mn, and optionally, may further include Al.

Furthermore, the cathode active material may be a lithium iron phosphate (LFP)-based cathode active material represented by chemical formula LiFePO₄.

Furthermore, the lithium-transition metal oxide may be a secondary particle formed by assembling or agglomerating a plurality of primary particles into a single particle, or may be in the form of a single particle. The single particle form may, for example, exclude a secondary particle formed by assembling or agglomerating the plurality of primary particles (e.g., more than 10) into a single particle. However, the single particle form does not exclude a case in which 2 to 10 single particles are attached or adhered to each other to form a substantially single particle (e.g., a structure transformed into a single particle). In some embodiments, the cathode active material may include both a secondary particle form and a single particle form.

The anode is not particularly limited, and a negative active material may include carbon-based active materials such as artificial graphite and natural graphite, silicon-based active materials such as silicon oxide (SiOx, where 0<x<2), Si-C composites and pure Si, and metals such as lithium metal and lithium-metal alloys.

Meanwhile, the all-solid-state lithium secondary battery may be a non-anode secondary battery. That is, it may be a battery in which an anode active material layer is not formed on an anode current collector during the battery assembly process. When the non-anode lithium secondary battery is initially charged or charged for the first time, a main cathode active material and a sacrificial cathode active material may be delithiated, and lithium ions generated from the cathode active material may be reduced on the anode current collector, thus forming a lithium metal layer or a lithium layer of a solid lithium layer.

The method for producing the all-solid-state lithium secondary battery is not particularly limited, but the all-solid-state lithium secondary battery may be produced in a manner of coating a slurry including an anode or cathode active material onto a current collector, followed by drying and rolling processes to produce an anode or cathode, respectively, and performing a photo-sintering process on an oxide-based thin film sheet formed by coating a slurry including oxide particles onto the anode or the cathode and then drying the slurry to form an oxide-based solid electrolyte sheet.

When the all-solid-state lithium secondary battery includes the oxide-based solid electrolyte sheet described above, there may be no risk of ignition due to electrolyte leakage, and it may be possible to exhibit excellent performance, such as high energy density.

### Mode for the Invention

Hereinafter, the present disclosure will be described in more detail with reference to examples. However, the following examples illustrate specific embodiments and are not intended to limit the embodiments.

### Inventive Examples 1 to 4 and Comparative Examples 1 to 2

### Manufacturing of a LLZO-based ceramic doped with Ga on a Li-Site

Raw material powder particles were prepared using Li₂CO₃ (DAE JUNG, 98%), La₂O₃ (STREM, 99.9%), Ga₂O₃ (Sigma, 99.99%), and ZrO₂ (Kanto, 99%) in a molar ratio of 6.25:3.00:2.00:0.25 (Li:La:Zr:Ga).

The raw materials were uniformly mixed by ball-milling at 150 RPM for 24 hours in a ceramic ball mill. The mixture was calcined at 900°C for 6 hours, then molded using a metal mold, and to increase density thereof, cold isostatic pressing (CIP) was performed at 200 MPa, followed by pulverization to produce powder particles.

An oxide sheet was produced using a formed mold from the calcined powder particles.

The sheet was sintered using an electric furnace, either in the first sintering operation alone or in both the first and second sintering operations, according to the conditions shown in Table 1 below, thus producing a Li_{6.25}Ga_{0.25}La₃Zr₂O₁₂ LLZO-based ceramic.

### Inventive Examples 5 and 6

### Manufacture of a LLZO-based ceramic doped with Ga on a Li-site and subjecting to La-excess.

Raw material powder particles of Li₂CO₃ (DAE JUNG, 98%), La₂O₃ (STREM, 99.9%), Ga₂O₃ (Sigma, 99.99%), and ZrO₂ (Kanto, 99%) were prepared with a molar ratio of Li:La:Zr:Ga of 6.25:3.03:2.00:0.25.

The raw materials were uniformly mixed by ball-milling at 150 RPM for 24 hours in a ceramic ball mill. The mixture was calcined at 900°C for 6 hours, then molded using a metal mold, and to increase density thereof, cold isostatic pressing (CIP) was performed at 200 MPa, followed by pulverization to produce a solid electrolyte.

The calcined powder particles were then molded to produce an oxide sheet.

The sheet was sintered using an electric furnace under the conditions shown in Table 1, either in the first sintering operation alone or in both the first and second sintering operations, to produce La-excess Li_{6.25}Ga_{0.25}La₃Zr₂O₁₂•0.015(La₂O₃) LLZO-based ceramic.

**[Table 1]**

| | Composition | Sintering Method | Sintering Temperature (°**C**) | Sintering Time (min) |
|---|---|---|---|---|
| Inventive Example 1 | Li_{6.25}Ga_{0.25}La₃Zr₂O₁₂ | Second Step Sintering | 1200 | 10 |
| | | | 1050 | 180 |
| Inventive Example 2 | Li_{6.25}Ga_{0.25}La₃Zr₂O₁₂ | Second Step Sintering | 1200 | 10 |
| | | | 1000 | 180 |
| Inventive Example 3 | Li_{6.25}Ga_{0.25}La₃Zr₂O₁₂ | Second Step Sintering | 1150 | 10 |
| | | | 1050 | 180 |
| Inventive Example 4 | Li_{6.25}Ga_{0.25}La₃Zr₂O₁₂ | Second Step Sintering | 1100 | 10 |
| | | | 1050 | 180 |
| Inventive Example 5 | Li_{6.25}Ga_{0.25}La₃Zr₂O₁₂•0.015(La₂O₃) | Second Step Sintering | 1200 | 10 |
| | | | 1150 | 180 |
| Inventive Example 6 | Li_{6.25}Ga_{0.25}La₃Zr₂O₁₂•0.015(La₂O₃) | Second Step Sintering | 1150 | 10 |
| | | | 1050 | 180 |
| Comparative Example 1 | Li_{6.25}Ga_{0.25}La₃Zr₂O₁₂ | First Step Sintering | 1050 | 180 |
| Comparative Example 2 | Li_{6.25}Ga_{0.25}La₃Zr₂O₁₂ | First Step Sintering | 1100 | 180 |

### Evaluation Example

The physical properties of the LLZO-based ceramic produced in Inventive Examples 1 to 6 and Comparative Examples 1 to 2 were evaluated according to the following property evaluation methods.

### (1) Relative Density Measurement

The LLZO-based ceramic produced in Inventive Examples 1 to 6 and Comparative Examples 1 to 2 were measured using the Archimedian pycnometry method, using the sample density/theoretical density as the relative density, as shown in Table 2 below. The theoretical density is 5.11 g/cm³.

### (2) Microstructure and Crystal Structure Analysis

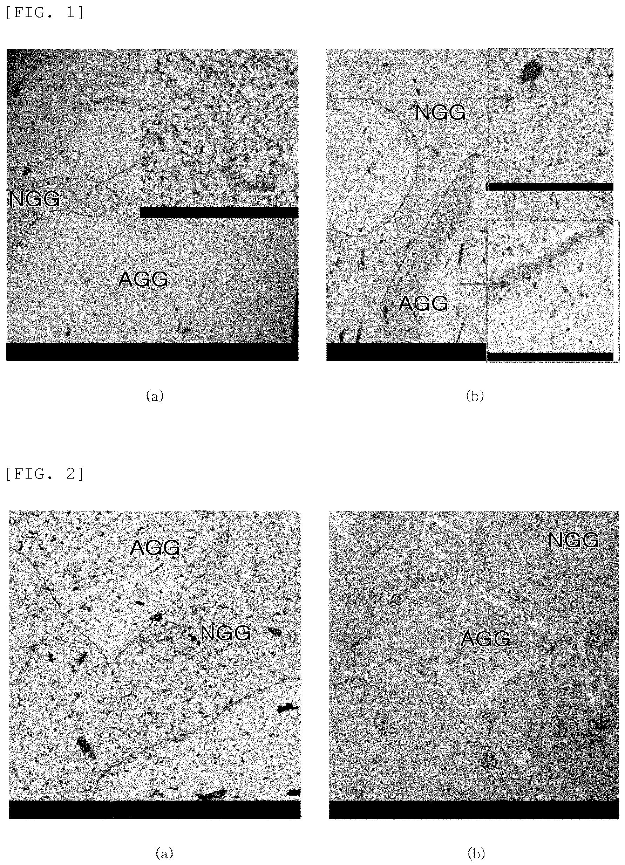

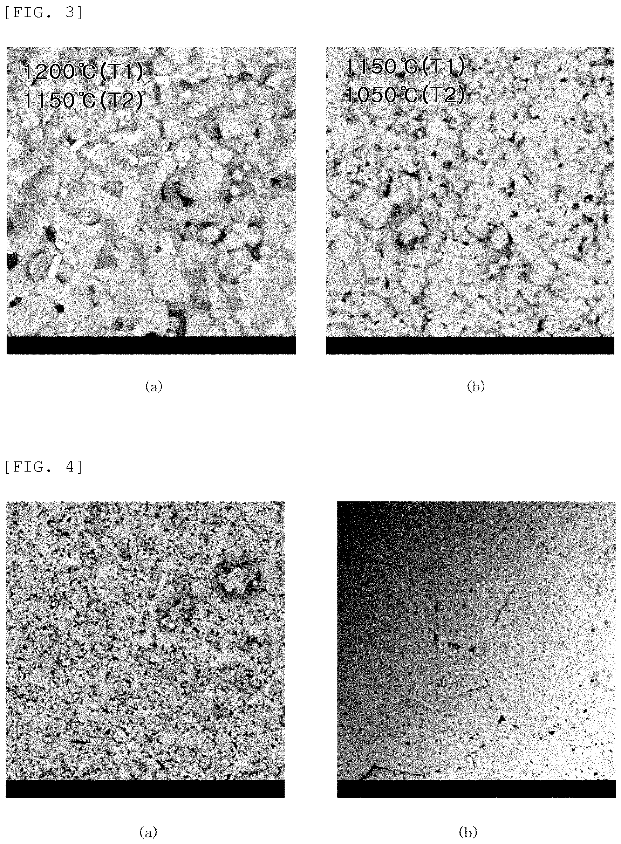

The fracture surface of the LLZO-based ceramic produced in Inventive Examples 1 to 6 and Comparative Examples 1 to 2 were captured using a scanning electron microscope (SEM). Inventive Example 1 is illustrated in (a) of FIG. 1(a), Inventive Example 2 is illustrated in (b) of FIG. 1, Inventive Example 3 is illustrated in (a) of FIG. 2, Inventive Example 4 is illustrated in (b) of FIG. 2, Inventive Example 5 is illustrated in (a) of FIG. 3, and Inventive Example 6 is illustrated in (b) of FIG. 3, respectively.

Furthermore, the LLZO-based ceramic produced in Inventive Examples 1 to 6 and Comparative Examples 1 and 2 were analyzed by the -SEM to observe microstructures thereof, which are shown in Table 2.

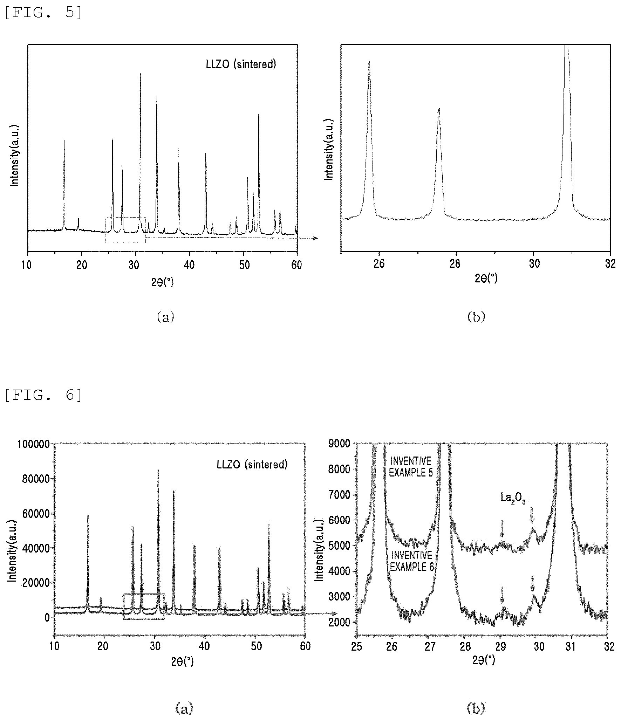

Furthermore, different results for XRD patterns of the LLZO-based ceramic and the La-excess LLZO-based ceramic are shown in FIGS. 5 and 6, respectively. (a) and (b) of FIG. 5 show XRD pattern analysis results of the LLZO-based ceramic of Inventive Example 1 and an enlarged view of a portion thereof, respectively, and (a) and (b) of FIG. 6 show the XRD pattern analysis results of the LLZO-based ceramic of Inventive Examples 5 and 6, respectively, and an enlarged view of a portion thereof.

### (3) Ionic Conductivity Measurement

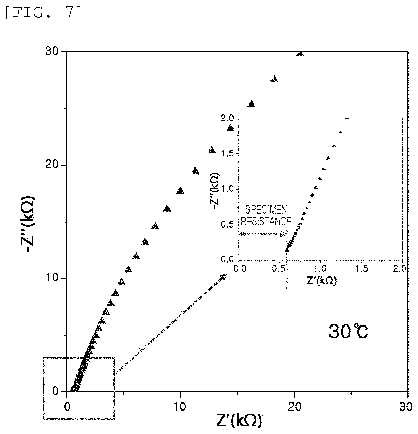

To measure the lithium ion conductivity of the LLZO of Inventive Example 5 described above, in resistance of the sample, AC impedance was measured using an MFIA analyzer (Zurich instruments). The measurement results are shown in FIG. 7.

### (4) Mechanical Strength Measurement

An average elastic modulus (AEM) of Comparative Example 2 (AGG sample), Inventive Example 1 (AGG+NGG sample), and Inventive Example 5 (NGG sample) was measured using the microindentation method, and the results are illustrated in Table 3 below.

The AGG sample represents a sample with coarse grain growth, while the NGG sample represents a sample with normal grain growth in which the coarse grain growth does not occur, and the AGG+NGG sample represents a structure in which the AGG and NGG samples are mixed in a ratio of 70:30 to 30:70.

**[Table 2]**

| | Relative Density (%) | Microstructure |
|---|---|---|
| Inventive Example 1 | 93 | NGG+AGG |
| Inventive Example 2 | 92 | NGG+AGG |
| Inventive Example 3 | 90 | NGG+AGG |
| Inventive Example 4 | 88 | NGG+AGG |
| Inventive Example 5 | 94 | NGG |
| Inventive Example 6 | 93 | NGG |
| Comparative Example 1 | 86 | NGG |
| Comparative Example 2 | 94 | AGG |

**[Table 3]**

| | average elastic modulus (GPa) |
|---|---|
| Inventive Example 1(AGG + NGG sample) | 121 |
| Inventive Example 5(NGG sample) | 140 |
| Comparative Example 2(AGG sample) | 117 |

(a) of FIG. 1 represents Inventive Example 1, (b) of FIG. 1 represents Inventive Example 2, (a) of FIG. 2 represents Inventive Example 3, (b) of FIG. 2 represents Inventive Example 4, (a) of FIG. 3 represents Inventive Example 5, and (b) of FIG. 3 represents Inventive Example 6. Referring to Table 2 and FIGS. 1 to 3, the LLZO-based ceramic of Inventive Examples 1 to 6, which have undergone two-step sintering, exhibited excellent relative densities and exhibited only NGG, or AGG in some regions and NGG in some regions. Furthermore, FIG. 3 is an image demonstrating the effect of the La-excess LLZO-based ceramic. It may be confirmed that despite exposure at maximum sintering temperatures of 1200°C and 1150°C, no AGG was observed, and NGG was observed across the entire region. Average grain sizes measured using the Image-J program in (a) and (b) of FIG. 3 were 7.8 µm and 6.4 µm, respectively, and the standard deviations thereof were 2.6 µm and 2.1 µm, respectively.

Comparing FIGS. 1 to 3 which fall under the inventive examples with FIG. 4 which fall under the comparative Examples, it can be confirmed that Comparative Example 1, which has undergone only normal sintering, showed that the LLZO-based ceramic did not densify when sintered at 1050°C, and Comparative Example 2 showed that the sample densified when sintered at 1100°C, but AGG occurred. This confirms that the sinterability of the sample changes drastically even with a small sintering temperature difference of 50°C.

According to FIG. 5, it may be confirmed that the LLZO-based ceramic has a cubic crystal structure. According to FIG. 6, it may be confirmed that the La-excess LLZO-based ceramic also has a cubic crystal structure. Upon enlarging and comparing the XRD results of a low-angle portions of FIGS. 5 and 6, it may be confirmed that the LLZO-based ceramic exhibits no secondary phases, including a La₂O₃ phase, but the La-excess LLZO-based ceramic exhibits a cubic crystal structure and the coexistence of the La₂O₃ secondary phase.

According to FIG. 7, it may be confirmed the lithium ion conductivity of the LLZO of Inventive Example 5 described above is approximately 1 mS/cm at 30°C. This may confirm that the LLZO of Inventive Example 5 has a cubic crystal structure.

## Claims

1. A method for producing a lithium lanthanum zirconium oxide (LLZO)-based ceramic, the method comprising:
a sintering operation of sintering an oxide sheet including LLZO powder particles including elements lithium, lanthanum and zirconium,
wherein the sintering operation includes a first sintering operation of sintering at a temperature of T₁ and a second sintering operation of sintering at a temperature of T₂, lower than T₁.

2. The method for producing a LLZO-based ceramic of claim 1, wherein the T₁ is 1050 to 1400°C, and
the T₂ is 1000 to 1300°C.

3. The method for producing a LLZO-based ceramic of claim 1, wherein the first sintering operation is performed for 10 seconds to 1 hour, and
the second sintering operation is performed for 10 minutes to 24 hours.

4. The method for producing a LLZO-based ceramic of claim 1, wherein the oxide sheet further includes metal oxide powder particles.

5. The method for producing a LLZO-based ceramic of claim 4, wherein the metal oxide powder particles are included in an amount of 1 to 10 mol% based on La in total LLZO powder particles.

6. The method for producing a LLZO-based ceramic of claim 4, wherein the metal oxide powder particles include an oxide of a lanthanide metal.

7. The method for producing a LLZO-based ceramic of claim 4, wherein the metal oxide powder particles include at least one selected from the group consisting of La₂O₃ or Sm₂O₃ and Gd₂O₃.

8. A LLZO-based ceramic having a relative density of 88% or greater, and comprising one or more crystal grains having a size of 1 to 10 µm,
wherein a standard deviation of a crystal grain size is 80% or less of an average crystal grain size, and
the crystal grains have a cubic crystal structure.

9. The LLZO-based ceramic of claim 8, wherein the average crystal grain size is 1 to 10 µm.

10. The LLZO-based ceramic of claim 8, wherein the average crystal grain size is 4 to 9 µm.

11. The LLZO-based ceramic of claim 8, wherein the standard deviation of the crystal grain size is 50% or less of the average crystal grain size.

12. The LLZO-based ceramic of claim 8, wherein the LLZO-based ceramic includes a garnet-type oxide crystal grain including lithium, lanthanum and zirconium.

13. The LLZO-based ceramic of claim 8, wherein the LLZO-based ceramic includes crystal grains in which a Li-site is doped with a trivalent cation metal element.

14. The LLZO-based ceramic of claim 8, wherein the LLZO-based ceramic includes crystal grains in which a Li-site is doped with at least one element selected from the group consisting of Al, Ga, In, Sc and Y.

15. The LLZO-based ceramic of claim 8, wherein the LLZO-based ceramic includes crystal grains having a composition represented by the following chemical formula 1:
[Chemical Formula 1] Li₇₋₃ₐM¹ₐLa₃Zr_{2-1.25b}M²_{b}O₁₂
in chemical formula 1, 0<a<1 and 0≤b<1 are satisfied,
M¹ is at least one trivalent cation metal selected from the group consisting of Al, Ga, In, Sc and Y, and
M² is at least one pentavalent cation metal selected from the group consisting of Nb, Ta and V.

16. The LLZO-based ceramic of claim 8, wherein the LLZO-based ceramic further includes a lanthanide metal oxide.

17. The LLZO-based ceramic of claim 16, wherein the lanthanide metal oxide has at least one crystal phase selected from the group consisting of La₂O₃, Sm₂O₃ and Gd₂O₃.

18. The LLZO-based ceramic of claim 8, wherein the LLZO-based ceramic has a composition represented by the following chemical formula 1-1:
[Chemical Formula 1-1] Li_{7-3c}M³_{c}La₃Zr_{2-1.25d}M⁴_{d}O₁₂•e(La₂O₃)
in chemical formula 1-1, 0<c<1 and 0≤d<1 0.001≤e<0.1 are satisfied,
M³ is at least one trivalent cation metal selected from the group consisting of Al, Ga, In, Sc and Y, and
M⁴ is at least one pentavalent cation metal selected from the group consisting of Nb, Ta and V.

19. An oxide-based electrolyte including the LLZO-based ceramic of one of claims 8 to 18.

20. An all-solid-state lithium secondary battery comprising the oxide-based electrolyte of claim 19.
